# FASCICULE DE BREVET EUROPEEN

(11) **EP 0 403 347 B1**
(45) Date de publication et mention de la délivrance du brevet: **01.06.1994**
(21) Numéro de dépôt: 90401587.2
(22) Date de dépôt: 11.06.1990
(51) Int. Cl.: C08K 7/04, C08L 83/04

(54) **Produit composite à base de fibres minérales, utile pour la fabrication de pièces moulées**
Verbundmaterial auf der Basis von Mineralfasern zur Herstellung von Formteilen
Mineral fibre composite useful for the manufacture of moulding articles

(30) Priorité: 15.06.1989 FR 8907928
(43) Date de publication de la demande: 19.12.1990
(73) Titulaire: ISOVER SAINT-GOBAIN, F-92400 Courbevoie (FR)
(72) Inventeur: Bernard, Jean-Luc, F-60600 Clermont (FR); Demars, Yves, F-60600 Clermont (FR)
(74) Mandataire: Luziau, Nelly

(56) Documents cités:
- EP-A- 0 371 847
- CHEMICAL ABSTRACTS, vol. 105, no. 26, 29 décembre 1986 Columbus, Ohio, USA ref.no. 228226A
- CHEMICAL ABSTRACTS, vol. 100, no. 10, 5 avril 1984 Columbus, Ohio, USA ref. no.69340M
- CHEMICAL ABSTRACTS, vol. 104, no. 6, 10 février 1986 Columbus, Ohio, USA ref.no. 34913F

## Description

L'invention concerne un produit composite comprenant des fibres minérales et un liant thermodurcissable, utile notamment comme primitif pour la fabrication de pièces moulées.

Il est connu d'obtenir des pièces, éventuellement en forme, de grande ou faible densité, par moulage à chaud d'un primitif à base de fibres minérales, notamment de fibres de verre ou de roche, et contenant un liant.

Ces primitifs peuvent être constitués par exemple par des mats de fibres minérales utiles pour l'isolation.

Ces mats de fibres minérales pour l'isolation peuvent être fabriqués par différents procédés.

Par exemple, les fibres minérales, telles que des fibres de verre, peuvent être obtenues par la technique connue de l'étirage centrifuge, selon laquelle la matière vitreuse en fusion est introduite dans un centrifugeur tournant à grande vitesse, dont elle s'échappe sous forme de filaments par une série d'orifices pratiquées dans la paroi du centrifugeur. Les filaments sont étirés sous forme de fibres par un courant gazeux ayant une vitesse et une température élevées. Les fibres entrainées par le courant gazeux sont recueillies sur un organe récepteur où elles forment un matelas. Pour assurer l'assemblage des fibres entre elles, une composition de liant est pulvérisée sur les fibres avant qu'elles n'atteignent l'organe récepteur. Le matelas est alors ramené à l'épaisseur souhaitée. Il est alors utilisé, encore humide, comme primitifs pour la fabrication de pièces moulées.

Les matelas ou feutres de fibres minérales pour l'isolation peuvent aussi être utilisés ultérieurement pour former un primitif en vue de la fabrication de pièces moulées. Ils sont alors secs. Dans ce cas, le matelas est déchiqueté par tout dispositif approprié pour individualiser les fibres qu'il contient ou pour former des flocons. A ces fibres individualisées ou à ces flocons, est ajouté un liant pour former un produit composite, qui est donc un mat reconstitué, et qui est prêt à être pressé à chaud pour obtenir la pièce moulée souhaitée. Un tel produit composite, obtenu par reconstitution d'un mat de fibres minérales, est décrit par exemple à la demande de brevet français 88 15735 déposée le 1er Décembre 1988 par la Demanderesse.

Les produits composites, objets de cette demande, sont formés de flocons obtenus à partir d'un feutre de fibres minérales déchiqueté par un dispositif de cardage particulier et auxquels est ajouté un liant. Ces produits présentent des avantages. Notamment, ils sont fabriqués à partir de matelas d'isolation traditionnels, et donc ne nécessitent pas une campagne de production spécifique. Les produits reconstitués présentent un pouvoir isolant très analogue à celui du matelas initial servant à leur fabrication et de meilleures propriétés mécaniques dues à une diminution de l'anisotropie présentée par le matelas d'isolation initial, anisotropie qui résulte du procédé de fabrication des matelas d'isolation.

En outre, ces produits composites reconstitués contiennent un liant qui est introduit, sous forme liquide ou en poudre, sur des fibres froides ; cela donne une entière liberté dans le choix du liant. On peut choisir en particulier un liant à action retardée, c'est-à-dire un liant dont l'action ne se produit pas, ou extrêmement lentement, à température ambiante. Cela permet donc de conserver les produits composites avant utilisation.

Les liants, introduits sous forme de poudre, sont particulièrement avantageux en ce sens qu'ils permettent la fabrication du produit composite "à sec", sans faire intervenir de solvants. Cette technique permet un mélange fibre-liant non perturbé par des effets de collage ; l'adhésion n'intervient que lors de la fusion du liant.

Des liants utilisables pour former les produits composites, décrits dans la demande mentionnée précédemment, sont par exemple des résines thermodurcissables, comme les résines phénolformaldéhyde novolaques, les résines époxy, silicones, polyuréthanne, ou des résines thermoplastiques comme le polyéthylène et le polypropylène.

L'utilisation de produits composites, comprenant des fibres minérales ou des flocons et certains liants en poudre, tels que les novolaques, comme primitifs pour la fabrication de pièces moulées, peut poser des problèmes en ce sens que les produits moulés obtenus présentent une résistance mécanique, notamment une résistance à la rupture, insuffisante. D'autre part, ces produits moulés ne sont pas stables aux températures élevées.

Le but de l'invention est donc un produit composite reconstitué, à base de fibres minérales contenant un liant en poudre, utile comme primitif pour la fabrication de produits moulés présentant une résistance mécanique satisfaisante, même lorsqu'ils sont soumis à des températures élevées.

Le produit composite, selon l'invention, comprend des fibres minérales et un liant thermodurcissable en poudre. Il se caractérise en ce que le liant est formé d'un mélange de résines thermodurcissables en poudre comprenant une résine novolaque et une résine silicone, la résine novolaque et la résine silicone représentant respectivement de 1 % à 70 % et de 0,5 à 70 % du poids total du produit composite.

Les fibres minérales peuvent être des fibres individuelles ou sous forme de flocons obtenues par déchiquetage d'un feutre de fibres minérales d'isolation.

Le mélange liant peut contenir en outre, des adjuvants usuels, tels qu'une substance ignifugeante pour la résine phénolique, comme du mica.

La résine novolaque est une résine de phénolformaldéhyde obtenue par polycondensation de phénol et de formaldéhyde en milieu acide, le rapport molaire du formaldéhyde au phénol étant inférieur à 1. La résine fond à partir de 90°C environ.

On utilise, comme résine silicone, une méthyl ou phénylsilicone et de préférence une méthylsilicone. La méthylsilicone fond à une température assez basse, entre 45 et 70°C.

Suivant les propriétés souhaitées pour le produit thermoformé fini, obtenu à partir du produit composite selon l'invention, on peut faire varier les quantités de résines novolaque et silicone.

Ainsi, lorsque le produit composite contient un mélange de liants en poudre comprenant par exemple de 15 à 70 % de résine silicone et de 1 à 5 % de résine novolaque, et de préférence de 15 à 20 % de résine silicone et de 1 à 2 % de résine novolaque, ce produit présente une bonne résistance mécanique, même soumis à une température élevée. La limite de résistance mécanique correspond alors à celle des fibres minérales ; pour des fibres minérales, elle est environ de 450 - 500°C ; pour des fibres de roche, elle est de 700°C environ. A noter que, à partir de 300°C, la silicone commence à se décomposer. La résine novolaque a subi une carbonisation. L'utilisation d'un mélange liant selon l'invention fait que, même si la résistance mécanique diminue par suite de la décomposition de la silicone, le produit thermoformé conserve sa forme, ce qui présente des avantages lorsqu'il est utilisé par exemple comme écran thermique.

Lorsque le produit composite est destiné à fabriquer un produit thermoformé ne nécessitant pas une résistance mécanique sous l'action de la chaleur, le mélange liant peut comprendre une quantité minime de résine de silicone (de 0,5 à 2 %) et entre 15 % et 70 % de résine novolaque, et de préférence entre 0,5 et 1 % de résine de silicone et entre 15 et 20 de résine novolaque. Le produit thermoformé fini présente alors une bonne résistance mécanique (voir exemple 1). L'utilisation d'une plus grande quantité de silicone augmente le prix de revient du produit sans améliorer la résistance mécanique. Une trop grande quantité de résine novolaque n'est pas souhaitée car cette résine ne présente pas un bon comportement au feu.

Les produits thermoformés finis, préparés à partir de produits composites selon l'invention, sont en outre résistants à l'humidité. Ainsi, le produit composite peut comprendre, par exemple, un mélange liant contenant 10 % de résine novolaque et 10 % de résine silicone. On obtient alors un produit thermoformé fini qui présente une résistance mécanique stable dans le temps même en milieu très humide.

Il peut être avantageux d'ajouter, au mélange liant, un durcisseur afin de diminuer la durée nécessaire au durcissement, sous l'action de la chaleur, de la résine silicone.

La quantité totale de liant associé aux fibres est, de préférence, inférieure à 70 % en poids, un pourcentage minimum de 30 % en poids de fibres étant nécessaire pour obtenir un produit fibreux moulé de structure stable.

Le produit composite peut comprendre toutes fibres minérales utilisées généralement pour l'isolation par exemple des fibres de verre, des fibres de roche ou de laitier ou des fibres céramique. Ces fibres peuvent provenir de matelas ou feutre de fibres minérales d'isolation.

Ces matelas peuvent être fabriqués comme décrit précédemment et comprennent, par exemple, des fibres de verre, d'un diamètre moyen compris entre 3 et 6 µm, traitées par une composition d'encollage contenant une résine et des additifs usuels, tels que urée, silane, etc... La résine, utilisée habituellement pour l'encollage des fibres pour l'isolation peut être une résine de formaldéhyde-phénol du type novolaque ou du type résol. Les résines résol sont obtenues par polycondensation de formaldéhyde et de phénol, dans un rapport molaire formaldéhyde/phénol supérieur à 1, en milieu basique. Le matelas d'isolation, à l'état fini, en contient entre environ 5 % et 10 % en poids.

Le produit composite selon l'invention peut être formé à partir de fibres minérales, sous forme individuelles ou en flocons, obtenues par exemple par déchiquetage d'un matelas d'isolation tel que ceux décrits précédemment. Ces matelas sont déchiquetés par des dispositifs tels que ceux décrits au brevet français 2 591 621 ou à la demande de brevet français mentionnée précédemment. Ces dispositifs, aussi appelés cardeuses, forment des flocons ou des fibres individualisées qui se déposent par gravité sur un organe récepteur, et forment une nappe. La réception de ces flocons ou des fibres individualisées, effectuée sans l'intervention d'un courant gazeux intense, comme c'est le cas dans la fabrication de matelas isolants traditionnels, permet de former une nappe dans laquelle les fibres n'ont pas une orientation préférentielle, ce qui, par conséquent, conduit à la formation d'un produit plus isotrope. Le liant en poudre est généralement introduit après le cardage et avant le dépôt des fibres sur l'organe récepteur afin d'obtenir une répartition plus homogène de la poudre parmi les fibres.

La densité des matelas d'isolation servant à la fabrication des produits composites reconstitués, selon l'invention, peut varier, allant des densités faibles de l'ordre de 10 kg/m³ aux densités très élevées pouvant aller jusqu'à 300 kg/m³ nécessitées pour des raisons d'encombrement et de transport.

Les produits composites selon l'invention peuvent être utilisés comme primitifs, par exemple pour la fabrication de pièces ou de panneaux moulés. Généralement, le moulage a lieu en utilisant des pressions de 5 à 100 bars, à des températures pouvant atteindre 250°C. Les panneaux ou pièces moulés peuvent avoir des densités variant entre 100 kg/m³ et 2000 kg/m³.

Le moulage des primitifs peut être effectué immédiatement après la fabrication du produit composite ou bien à une date ultérieure puisque les liants utilisés sont secs et ne sont pas ou peu actifs à température ambiante.

Les exemples suivants, non limitatifs, illustrent l'invention.

### EXEMPLE 1

On prépare un produit composite comme il est décrit à la demande de brevet français citée précédemment. Les fibres de verre ont un diamètre moyen de 4 à 5 µm. Le liant est formé d'un mélange de poudres de novolaque (20 %) et de méthylsilicone (1 %), les pourcentages étant exprimés en poids par rapport au poids total du produit composite. Il comprend en outre un durcisseur pour la résine silicone. Des échantillons de ce produit composite sont traités, à 200°C pendant 2 mn, sous différentes pressions pour durcir le mélange liant et former des éprouvettes présentant diverses densités.

Ces éprouvettes sont soumises au test de résistance à la rupture en flexion. Ces échantillons d'une dimension de 150/75 mm environ sont fixés par leurs extrémités à deux supports verticaux et sont soumis, en leur milieu, à des contraintes qui augmentent progressivement jusqu'à leur rupture.

A titre de témoin, un produit composite est fabriqué d'une manière analogue, à la différence que le liant est formé uniquement de novolaque (20 % en poids). Des échantillons de ce produit sont traités thermiquement comme les échantillons selon l'invention.

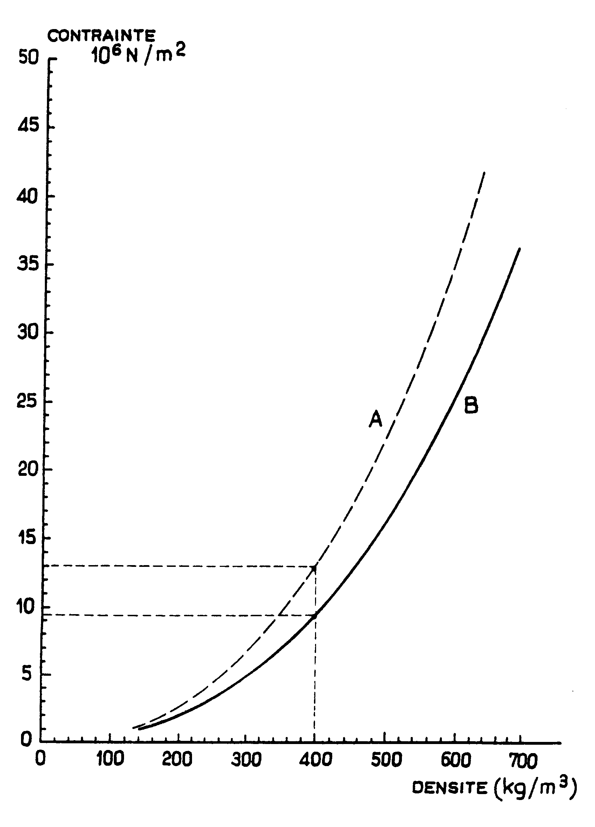

La figure unique donne les courbes de contrainte à la rupture (contrainte en N/m² en fonction de la densité des produits en kg/m³) pour le produit (A) selon l'invention et le produit (B) témoin.

On peut voir que, pour une même densité, le produit A selon l'invention présente une meilleure résistance à la rupture que le produit B témoin, et cela d'autant plus que la densité augmente.

Ainsi, la présence, dans un produit composite, d'un liant en poudre contenant une résine phénolique associée à une résine silicone, même utilisée en faible quantité, permet d'améliorer notablement la résistance à la rupture de produits moulés à partir de ces produits composites.

### EXEMPLE 2

On prépare un produit composite, comme à l'exemple 1. Cependant, le liant utilisé comprend 20 % en poids de méthylsilicone et 1 % de résine phénolique. Le produit obtenu, après thermoformage à une densité de 400 kg/m³, est stable mécaniquement, même à une température de 450°C et peut être utilisé comme écran thermique.

L'invention présente de nombreux avantages.

Elle permet de fabriquer des produits composites contenant des liants en poudre (particulièrement avantageux puisqu'on peut les fabriquer "à sec") sans entraîner, pour le produit thermoformé fini, une diminution de la résistance mécanique.

La présence de silicone leur confère, en outre, un caractère hydrophobe permettant l'utilisation des produits thermoformés finis, même dans des conditions de forte humidité.

Le produit moulé, contenant de la silicone en quantité suffisante, présente une bonne résistance mécanique même soumis à des températures élevées. Aux températures correspondant à la décomposition de la silicone, le produit thermoformé conserve encore sa forme, ce qui est particulièrement avantageux lorsqu'on l'utilise par exemple comme écran thermique, par exemple dans des véhicules automobiles. D'une part, les viscosités respectives du silicone et de la novolaque fondus situées dans un rapport 10, permettent le gainage des fibres par le silicone avant l'adhésion de la novolaque ; D'autre part, la décomposition du liant phénolique lors de l'usage à haute température, n'altère pas le rôle liant du silicone.

Dans les conditions utilisées, la résine de silicone est compatible avec la résine phénolique.

La présence de résine de silicone permet aussi de réduire la quantité de résine phénolique qui n'a pas un bon comportement au feu, sans diminuer la résistance mécanique.

## Revendications

1. Produit composite comprenant des fibres minérales et un liant thermodurcissable en poudre, caractérisé en ce que le liant est formé par un mélange de résines thermodurcissables comprenant de 1 % à 70 % en poids de résine novolaque et de 0,5 à 70 % en poids de résine silicone, les pourcentages étant exprimés en poids par rapport au poids total du produit composite.

2. Produit composite conforme à la revendication 1, caractérisé en ce qu'il est formé de fibres individuelles ou sous forme de flocons obtenues par déchiquetage d'un feutre de fibres minérales d'isolation.

3. Produit conforme à l'une des revendications 1 ou 2, caractérisé en ce que la résine silicone est une méthylsilicone.

4. Produit conforme à l'une des revendications 1 à 3, caractérisé en ce que le mélange liant comprend de 15 à 70 % de silicone et de 1 à 5 % de résine novolaque, et de préférence de 15 à 20 % de silicone et de 1 à 2 % de résine novolaque.

5. Produit conforme à l'une des revendications 1 à 3, caractérisé en ce que le mélange comprend de 0,5 à 2 % de silicone et de 15 à 70 % de résine novolaque, et de préférence de 1 à 2 % de silicone et de 15 à 20 % de résine novolaque.

6. Produit conforme à l'une des revendications 1 à 5, caractérisé en ce que les fibres sont des fibres de verre, de roche ou des fibres céramiques.

7. Produit conforme à la revendication 6, caractérisé en ce que les fibres ont un diamètre moyen compris entre 3 et 6 µm.

8. Application du produit conforme à l'une des revendications 1 à 7, à la fabrication de pièces en forme moulées à chaud.

## Patentansprüche

1. Verbundprodukt mit Mineralfasern und einem pulverförmigen, wärmeaushärtenden Bindemittel, dadurch gekennzeichnet, daß das Bindemittel aus einem Gemisch von wärmeaushärtenden Harzen besteht, welches zwischen 1 und 70 Gew.-% Novolakharz sowie zwischen 0,5 und 70 Gew.-% Silikonharz umfaßt, wobei die Prozentangaben als Gewichtsanteil im Verhältnis zum Gesamtgewicht des Verbundprodukts ausgedrückt sind.

2. Verbundprodukt nach Anspruch 1, dadurch gekennzeichnet, daß es aus Fasern gebildet ist, welche vereinzelt oder in Form von Flocken vorliegen, die durch das Zerreißen eines Mineralfaserfilzes für Dämmzwecke erhalten wurden.

3. Produkt nach Anspruch 1 oder 2, dadurch gekennzeichnet, daß das Silikonharz ein Methylsilikon ist.

4. Produkt nach einem der Ansprüche 1 bis 3, dadurch gekennzeichnet, daß das Bindemittelgemisch 15 bis 70% Silikon sowie 1 bis 5% Novolakharz, und vorzugsweise 15 bis 20% Silikon sowie 1 bis 2% Novolakharz umfaßt.

5. Produkt nach einem der Ansprüche 1 bis 3, dadurch gekennzeichnet, daß das Gemisch 0,5 bis 2% Silikon sowie 15 bis 70% Novolakharz, und vorzugsweise 1 bis 2% Silikon sowie 15 bis 20% Novolakharz umfaßt.

6. Produkt nach einem der Ansprüche 1 bis 5, dadurch gekennzeichnet, daß es sich bei den Fasern um Glasfasern, Steinfasern oder keramische Fasern handelt.

7. Produkt nach Anspruch 6, dadurch gekennzeichnet, daß die Fasern einen mittleren Durchmesser zwischen 3 und 6 µm aufweisen.

8. Verwendung des Produkts nach einem der Ansprüche 1 bis 7 zur Herstellung von heißgeformten Formstücken.

## Claims

1. Composite product comprising mineral fibres and a powdered thermosetting binder, characterised in that the binder is formed from a mixture of thermosetting resins comprising from 1% to 70% by weight of novolac resin and from 0.5 to 70% by weight of silicone resin, the percentages being expressed as weight percentages relative to the total weight of the composite product.

2. Composite product according to Claim 1, characterised in that it is formed from individual fibres or is in the form of flakes obtained by the shredding of a mineral fibre insulating felt.

3. Product according to either of Claims 1 and 2, characterised in that the silicone resin is a methyl silicone.

4. Product according to any one of Claims 1 to 3, characterised in that the binder mixture comprises from 15 to 70% of silicone and from 1 to 5% of novolac resin and preferably from 15 to 20% of silicone and from 1 to 2% of novolac resin.

5. Product according to any one of Claims 1 to 3, characterised in that the mixture comprises from 0.5 to 2% of silicone and from 15 to 70% of novolac resin, and preferably from 1 to 2% of silicone and from 15 to 20% of novolac resin.

6. Product according to any one of Claims 1 to 5, characterised in that the fibres are glass fibres, rock fibres or ceramic fibres.

7. Product according to Claim 6, characterised in that the average diameter of the fibres is between 3 and 6 µm.

8. Application of the product according to any one of Claims 1 to 7 to the production of articles moulded under heat.
